# EUROPEAN PATENT APPLICATION

(11) **EP 0 795 716 A1**
(43) Date of publication of application: **17.09.1997**
(21) Application number: 97104166.0
(22) Date of filing: 12.03.1997
(51) Int. Cl.: F16M 11/04, F16M 11/14

(54) **Improved support particularly for viewers, microscopes, monitors, television sets or the like**

(30) Priority: 14.03.1996 IT PD960018 U
(71) Applicant: Mediwork S.r.l., 35136 Padova (IT)
(72) Inventor: Miola, Emanuele, 35020 Roncaglia (Prov. of Padova) (IT)
(74) Representative: Modiano, Guido, Dr.-Ing.

(57) **Abstract**

The invention relates to an improved support (10) particularly for viewers, microscopes, monitors, television sets or the like, which comprises an articulated arm (11) which can be anchored detachably to a fixed base by anchoring elements (12) and has a free end provided with supporting elements (14). The support also comprises a section (16) which performs a translatory motion along a horizontal direction and a section (17) which rotates about at least two independent axes, one whereof is vertical, the rotating section being provided with a fluid-actuated spring which is adapted to automatically ensure the positional stability of the rotating section after the adjustment performed by the user. The translatory section and the rotating section are mutually rigidly coupled so as to provide the overall articulation of the unit. The support is characterized in that the supporting means comprise a spherical joint which can be locked in chosen positions in order to adjust the orientation of whatever is fixed thereto.

## Description

The present invention relates to an improved support particularly for viewers, microscopes, monitors, television sets or the like.

It is known that the quest for ergonomic working environments has currently led to the provision of supports for viewers, monitors, television sets or the like which place these devices in optimum positions so that the operator, or users in general, can easily fully utilize their potential and features.

Italian utility model patent application no. PD 95 U 000079 dated September 29, 1995, in the name of this same Applicant, proposed a support which is innovative with respect to commercially available supports.

Said support comprises an articulated arm which can be anchored detachably to a fixed base by anchoring means and has, at its free end, supporting means for viewers, microscopes, monitors, television sets or the like.

The support also comprises a section which performs a translatory motion in a horizontal direction and a section which rotates about at least two independent axes, one whereof is vertical, said rotating section having a fluid-actuated spring adapted to automatically ensure the positional stability of said section after the adjustment performed by the user.

The translatory section and the rotating section are rigidly coupled to each other so as to provide the overall articulation of the unit.

Although it constitutes a undisputed technical progress with respect to what is commercially available, this support entails some drawbacks, including the impossibility of having a spatial adjustment of the supporting devices and therefore of optimizing the possibilities of arrangement for the user.

A principal aim of the present invention is to provide an improved support which is even more flexible in operation than the above conventional support.

Accordingly, an object of the present invention is to provide a support wherein positional stability is reliable and does not weaken or vary over time.

Another object is to provide a support which can be produced with conventional technologies and can be easily adapted to the various requirements in the most disparate fields of application.

A further object of the present invention is to provide a support having competitive costs with respect to conventional supports.

This aim, these objects, and others which will become apparent hereinafter are achieved by an improved support particularly for viewers, microscopes, monitors, television sets or the like, comprising an articulated arm which can be anchored detachably to a fixed base by anchoring means and has a free end provided with supporting means for said viewers, microscopes, monitors, television sets or the like, said support also comprising a section which performs a translatory motion along a horizontal direction and a section which rotates about at least two independent axes, one of said axes being vertical, said rotating section being provided with a fluid-actuated spring adapted to automatically ensure the positional stability of said rotating section after the adjustment performed by the user, said translatory section and said rotating section being rigidly coupled to each other so as to provide the overall articulation of the unit, said support being characterized in that said supporting means comprise a spherical joint which can be locked in chosen positions in order to adjust the orientation of whatever is fixed thereto.

Further characteristics and advantages of the invention will become apparent from the detailed description of an embodiment thereof, illustrated only by way of non-limitative example in the accompanying drawings, wherein:

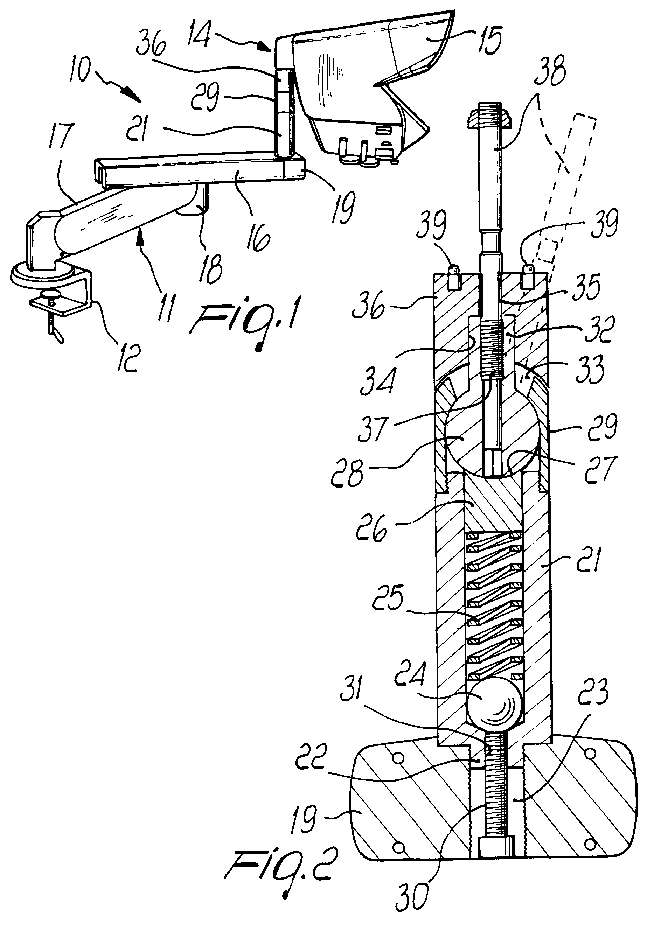

figure 1 is a general perspective view of the support;
figure 2 is a sectional view of the post for coupling, in the case being considered, a viewer.

With reference to the above figures, a support particularly for viewers, microscopes, monitors, television sets or the like is generally designated by the reference numeral 10.

The support 10 comprises an articulated arm, generally designated by the reference numeral 11, which can be detachably anchored by clamp-type anchoring means 12 to a base, not shown, which can be for example a table or another appropriate fixed base.

The articulated arm 11 also comprises, at its free end, supporting means, generally designated by the reference numeral 14, which in this case are for a viewer 15 but in other cases are usefully adapted to microscopes, monitors, television sets or the like.

The articulated arm 11 comprises a section, designated by the reference numeral 16, which performs a translatory motion in a horizontal direction, and a section 17 which rotates about at least two independent axes, a vertical one and a horizontal one.

The rotating section 17 also comprises a fluid-actuated spring, not shown in the figures, which automatically ensures the positional stability of said rotating section after the adjustment performed by the user.

The rotating section ends, on the opposite side with respect to the anchoring means 12, with a slider 18 slidingly coupled to the translatory section 16.

According to the invention, a base 19 is screwed and therefore rigidly coupled to the head of the translatory section 16 and vertically supports a cylindrical post generally designated by the reference numeral 20.

Said post 20 has a first cup-shaped portion 21 provided with a threaded tang 22 on the bottom which engages a complementarily threaded through hole 23 of the base 19.

A ball 24, a cylindrical helical spring 25, and a cylinder 26 are accommodated in sequence from the bottom towards the open part inside the first portion 21 of the post 20.

Said cylinder 26 protrudes from the first portion 21 with a spherical surface 27 whereon a spherical body 28 rests, said body being accommodated in a complementarily shaped seat formed inside a second dome-shaped portion 29 of the post 20.

The second portion 29 is conveniently screwed to the first portion 21 by means of the presence of a threaded coupling.

The spring 25 can be preloaded by the thrust of the ball 24, which is applied by a screw 30 accommodated in the through hole 23 and engaging in a threaded hole 31 of the tang 22.

The spherical body 28 protrudes with a radial protrusion 32 from the second portion 29 through an opening 33 of said portion and is inserted without play in a corresponding enlarged portion 34 of a through hole 35 which passes through a third portion 36 of the post 20.

As shown in the figures, the contact surfaces of the second portion 29 and of the third portion 36 are conveniently spherical.

A threaded hole 37 is provided coaxially to the hole 35 in the protrusion 32, and a pivot 38 for fixing in this case the viewer 15 engages in said threaded hole.

Pins 39 protrude at the top of the third portion 36 and are used to lock in position the viewer 15 with respect to the third portion 36 of the post 20.

From the above description it is thus evident that the third portion 36 can be rotated through a solid angle with respect to the second portion 29 by handling the viewer 15 with a force which is greater than the friction occurring between the body 28 and the seat containing it, said friction being variable through the action of the cylinder 26, which is pushed with a preloading action by the spring 25, said preloading action being produced by the screw 30.

By means of said friction, once a given mutual position is reached, it is maintained stably.

In practice it has been observed that the intended aim and objects of the present invention have been achieved, an additional operating possibility for the positioning of the viewer with respect to the user having been added.

In practice, the materials may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An improved support particularly for viewers, microscopes, monitors, television sets or the like, comprising an articulated arm which can be anchored detachably to a fixed base by anchoring means and has a free end provided with supporting means for said viewers, microscopes, monitors, television sets or the like, said support also comprising a section which performs a translatory motion along a horizontal direction and a section which rotates about at least two independent axes, one of said axes being vertical, said rotating section being provided with a fluid-actuated spring adapted to automatically ensure the positional stability of said rotating section after the adjustment performed by the user, said translatory section and said rotating section being rigidly coupled to each other so as to provide the overall articulation of the unit, said support being characterized in that said supporting means comprise a spherical joint which can be locked in chosen positions in order to adjust the orientation of whatever is fixed thereto.

2. A support according to claim 1, characterized in that said spherical joint is located in a post which is fixed to said translatory section.

3. A support according to one or more of the preceding claims, characterized in that said post has a first cup-shaped portion inside which a ball, a cylindrical helical spring, and a cylinder are accommodated in sequence from the bottom towards the open part, said cylinder protruding from said first portion.

4. A support according to one or more of the preceding claims, characterized in that said cylinder rests, by means of a spherical surface thereof, on a spherical body which is accommodated in a complementarily shaped seat formed inside a second dome-shaped portion of said post, said spherical body and said second dome-shaped portion constituting said spherical joint.

5. A support according to one or more of the preceding claims, characterized in that said second post portion is screwed to the first portion by means of the presence of a threaded coupling.

6. A support according to one or more of the preceding claims, characterized in that said spring is preloaded by the thrust of the ball, which is provided by a screw that engages a threaded through hole on the bottom of said first post portion.

7. A support according to one or more of the preceding claims, characterized in that said spherical body protrudes, with a radial protrusion, from said second post portion through an opening thereof and is inserted without play in a corresponding enlarged portion of a through hole which passes through a third post portion, the contact surfaces of said second and of said third post portions having a spherical shape.

8. A support according to one or more of the preceding claims, characterized in that in said protrusion of said spherical body there is provided a threaded hole wherein a pivot for fixing a viewer, a microscope, a monitor, a television set or the like engages.

9. An improved support particularly for viewers, microscopes, monitors, television sets or the like, according to one or more of the preceding claims, characterized by what is described and illustrated in the accompanying drawing sheets.
